# EUROPEAN PATENT SPECIFICATION

(11) **EP 2 668 384 B1**
(45) Date of publication and mention of the grant of the patent: **15.11.2017**
(21) Application number: 12739087.0
(22) Date of filing: 20.01.2012
(51) Int. Cl.: F01N 3/20, F01N 9/00, F01N 11/00

(54) **METHOD FOR SUPERVISION AND ADJUSTMENT OF AN EXHAUST POSTTREATMENT SYSTEM**
VERFAHREN ZUR ÜBERWACHUNG UND REGELUNG EINES ABGASNACHBEHANDLUNGSSYSTEMS
PROCÉDÉ DE CONTRÔLE ET DE RÉGLAGE D'UN SYSTÈME DE POST-TRAITEMENT DE GAZ D'ÉCHAPPEMENT

(30) Priority: 25.01.2011 SE 1150045
(43) Date of publication of application: 04.12.2013
(73) Proprietor: Scania CV AB, 151 87 Södertälje (SE)
(72) Inventor: EDSTAM, Mikael, S-144 62 Rönninge (SE)
(74) Representative: Scania CV AB
(86) International application number: PCT/SE2012/050049
(87) International publication number: WO 2012/102664

(56) References cited:
- EP-A2- 1 164 266
- EP-A2- 2 000 641
- US-A- 6 092 367
- US-A1- 2001 023 586
- US-A1- 2009 025 370
- US-A1- 2009 266 059
- US-A1- 2010 223 907
- US-A1- 2010 223 907
- US-A1- 2010 223 914

## Description

### Field of the invention

The present invention relates to a method and a system according to the preambles of the independent claims.

### Background to the invention

A combustion engine burns a mixture of air and fuel in order to generate a driving torque. The combustion process generates exhaust gases which are released from the engine to the atmosphere. The exhaust gases comprise nitrogen oxides (NO_{X}), carbon dioxide (CO₂), carbon monoxide (CO) and particles. NO_{X} is a composite term for exhaust gases which consist primarily of nitrogen oxide (NO) and nitrogen dioxide (NO₂). An exhaust post-treatment system treats exhaust discharges in order to decrease them before they are released to the atmosphere. In an example of an exhaust post-treatment system, a dosing system injects a reducing agent (e.g. urea) into the exhaust gases upstream of a selective catalytic reduction catalyst (SCR catalyst). The mixture of exhaust gases and reducing agent reacts in the SCR catalyst and thereby reduces the amounts of NO_{X} discharged to the atmosphere.

An example of a reducing agent is liquid urea, commercially available in the form of AdBlue®. This liquid is a non-toxic urea solution in water which is used to chemically reduce discharges of nitrogen oxides (NO_{X}), particularly for diesel-powered heavy vehicles.

The reducing agent reacts with NO_{X} in the SCR catalyst to effect the NO_{X} reduction. More specifically, the reducing agent is broken down and forms ammonia (NH₃) which then reacts with NO_{X} to form water and nitrogen gas (N₂).

To achieve the NO_{X} reduction described, NH₃ has to be stored in the SCR catalyst. For the SCR catalyst to work effectively, this storage has to be at an appropriate level. In more detail, the NO_{X} reduction, the conversion effectiveness, depends on the storage level.

Maintaining high conversion effectiveness in different operating states depends on maintaining the store of NH₃. The NH₃ level does however have to be decreased progressively as the temperature of the SCR catalyst rises, to avoid NH₃ discharges (i.e. surplus NH₃ being released from the SCR catalyst) which might decrease the conversion effectiveness of the catalyst.

In brief, to meet stricter environmental requirements, vehicle manufacturers are increasingly using SCR catalyst systems to remove nitrogen oxides (NO_{X}) from diesel exhaust gases. This is done by injecting ammonia solution into a SCR catalyst to help to convert NO_{X} particles to nitrogen gas and water. The exhaust cleaning strategy needs to cater for sufficient NO_{X} to be converted while at the same time trying not to inject too much ammonia, for both environmental and operational economy reasons.

American patent applications US-2008/0250778 and US-2010/0223914, and Swedish patent SE-530435, describe known devices within the technical field.

US-2008/0250778 refers to a method for regulating the amount of NH₃ stored in a catalyst for an exhaust post-treatment system, which involves determining the amount of NH₃ entering the catalyst on the basis of a dosing frequency for a dosing agent which is injected into the exhaust flow upstream of the catalyst, and determining the amount of NH₃ leaving the catalyst. The cumulative weight of NH₃ in the catalyst is calculated on the basis of the respective amounts entering and leaving the catalyst, and the dosing frequency is then calculated on the basis of the cumulative weight.

US-2010/0223914 refers to a method where a quantity of reducing agent is metered as a function of a stored model. During operation, a correction value for the metered quantity is determined on the basis of a comparison between a nominal emission or conversion for the associated operating point and a measured value for the actual emission or actual conversion.

SE-530435 refers to a method for supervising the function of an exhaust post-treatment system for a motor vehicle. This known system does a frequency analysis of a parameter related to exhaust gases flowing out from, for example, a catalyst. Information about the system's function is obtainable on the basis of the result of the frequency analysis.

Minimising discharges of NO_{X} thus requires careful regulation of the dosing of the reducing agent, e.g. urea, to the catalyst. The aim is to achieve optimum stored amounts of ammonia at different temperatures. However, the amount stored cannot be measured directly, which combines with the catalyst functioning very differently at different temperatures to make regulation very difficult.

The object of the present invention is to propose an improved form of regulation of the dosing of the reducing agent in order to optimise catalyst function.

### Summary of the invention

The above object is achieved with the invention defined by the independent claims.

Preferred embodiments are defined by the dependent claims.

In simplified terms, this is achieved by analysing superimposed NO_{X} variations in the exhaust gases downstream of the exhaust post-treatment device, e.g. the SCR catalyst, in order to determine the amount of ammonia stored in it.

The state of the catalyst can be measured indirectly by analysing amplitude variations of the NO_{X} content. The amplitude of the NO content after the catalyst depends on the amount of ammonia stored in it. The amount stored at different temperatures upstream can be determined on the basis of amplitudes of NO_{X} levels (per frequency) downstream.

The method and the system according to the present invention afford several potential advantages, inter alia by rapid and robust diagnosis of diminished conversion in the catalyst, which may for example relate to diluted reducing agent or ageing catalyst.
It is also possible, according to an embodiment, to modify the control by adding reducing agent at certain operating points in order to achieve optimum storage of it.

The solution according to the invention may also be generalised to actively identify the catalyst's characteristics over a wide range of operating points. This means implementing in the vehicle a function for system identification of the catalyst's dynamics. Such a function is difficult to implement in operation, since it affects emission levels, but might be used in retro-fitting or as laboratory support for rapid approximate calibration.

Applying the method and the exhaust post-treatment system according to the present invention results in more effective control of the amount of reducing agent added, particularly at high temperatures.
The method may also be used for rapid calibration of the amount of reducing agent to be added in each given state.

### Brief description of drawings

Figure 1 is a schematic block diagram illustrating implementation of an exhaust post-treatment system according to the present invention.
Figure 2 is a flowchart according to the present invention.
Figure 3 presents graphs illustrating the present invention.
Figure 4 presents graphs illustrating the present invention.
Figure 5 presents various graphs illustrating the present invention.

### Detailed description of preferred embodiments of the invention

The invention is described in detail below with reference to the attached drawings.

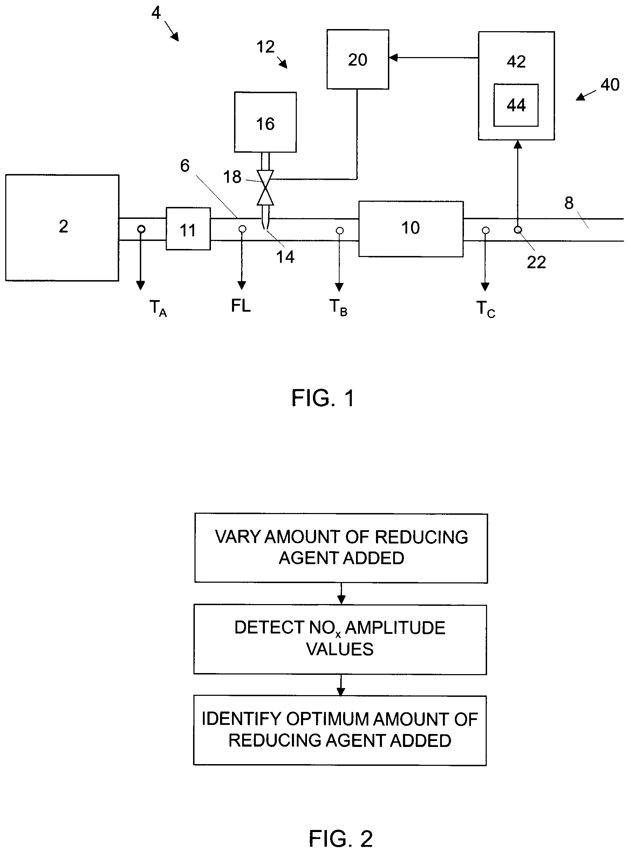

Figure 1 depicts schematically a combustion engine 2 with an associated exhaust post-treatment system 4. The engine may preferably be situated in a motor vehicle, but the invention is applicable in many other contexts where combustion engines are used, e.g. in industry and for watercraft. The exhaust gases leaving the engine 2 are led through an exhaust line 6 and are discharged to the surroundings via an exhaust outlet 8. An exhaust post-treatment device 10, preferably a catalyst, is provided in the exhaust line 6 and the exhaust gases from the engine 2 pass through the catalyst 10 before they are released to the surroundings via the exhaust outlet 8.

According to a preferred embodiment, the catalyst 10 is a SCR catalyst. In this case, reducing agent is injected by means of an injection device 12 into the exhaust gases in the exhaust line 6 upstream of the catalyst 10. The injection device 12 comprises one or more injection means 14 situated in the exhaust line 6 in the form of injection nozzles or the like, and a storage container 16 connected thereto for reducing agent. The injection device comprises also a control means 20 connected to the regulating means 18. The regulating means 18 is controlled by the control means 20, which determines how much reducing agent is to be injected into the exhaust gases on the basis of the prevailing operating conditions of the engine 2 and the catalyst 10 and in response to a control signal from a processing means 42.
The reducing agent may be urea (CO(NH₂)₂), ammonia (NH₃) or hydrocarbon (fuel).

The exhaust post-treatment system often comprises also a diesel oxidation catalyst (DOC) 11 which is situated upstream of the catalyst 10 and in which reactions which lower the emission levels of the exhaust gases take place. A diesel particle filter (DPF) (not depicted in the diagram) may also be provided upstream or downstream of the SCR catalyst to further lower the emission levels.

A sensor 22 is provided in the exhaust line 6 downstream of the catalyst 10. In this example it is an NO_{X} sensor adapted to generating a measurement signal which represents the NO_{X} content of the exhaust gases flowing out from the catalyst, i.e. their NO_{X} content at the outlet of the catalyst. A second NO_{X} sensor is often provided upstream of the catalyst 10 (not depicted in the diagram). The measurement signal may be a continuous signal representing the continuous changes in the parameter measured, i.e. resulting in a continuous flow of measured values for the magnitude of the parameter, but is usually registered as a discrete time signal in the form of a series of consecutive discrete measured values for the magnitude of the parameter.

The exhaust post-treatment system further comprises a supervision device 40 comprising a processing means 42 and a memory 44. The processing means is adapted to receiving the measurement signal from the sensor 22 for the measured magnitude of the NO_{X} content in the exhaust gases downstream of the catalyst 10. The processing means is further adapted to receiving one or more temperature signals T_{A}, T_{B} and T_{C} for temperatures of the exhaust gases measured along the exhaust path by a number of temperature sensors. For example, the sensor which provides T_{A} may be upstream of DOC, the sensor for T_{B} may be upstream of the SCR catalyst but downstream of DOC, and the sensor for T_{C} may be downstream of the SCR catalyst. In addition, a flow sensor is often provided upstream of the SCR catalyst to monitor the exhaust mass flow and deliver a measured value FL to the supervision device 40. The mass flow and temperature values are covered by the composite term "parameter values" and are appropriate to be conveyed to the supervision device 40. Further measured values may of course serve as parameter values.

The exhaust post-treatment system 4 for a motor vehicle thus comprises, according to the present invention, an exhaust post-treatment device 10, e.g. in the form of a catalyst or a filter and more preferably a selective catalytic reduction catalyst (SCR catalyst), and a sensor adapted to determining a measurement signal for the magnitude of a parameter related to NO_{X} in exhaust gases flowing out from said exhaust post-treatment device, with detection of amplitude values for the measurement signal delivered by the sensor.

The system further comprises an injection device 12 adapted to adding a reducing agent to the exhaust gases flowing into the exhaust post-treatment device, and a supervision device 40 comprising a processing means 42 and a memory 44, which processing means is adapted to receiving the measurement signal from the sensor 22 and to generating a control signal for the injection device.

The supervision device 40 is adapted to delivering a control signal to the injection device so that the amount of reducing agent added varies according to a predetermined pattern during a measuring period which may comprise a predetermined number of dosing periods which is large enough for the measurement to provide a stable result, but not so large that ambient factors such as mass flow and temperature might change so much as to affect the measurement. A typical number of dosing periods might be within the range 4-25.

The processing means is adapted to detecting NO_{X} amplitude variations in the exhaust gases downstream of the exhaust post-treatment device and to identifying and storing, in the memory 44, values of the amounts of reducing agent added when the NO_{X} amplitude in the exhaust gases downstream of the exhaust post-treatment device meets predetermined criteria for optimum regulation of the amount of reducing agent added. According to an embodiment, a criterion for optimum regulation is that the NO_{X} amplitude is minimised.

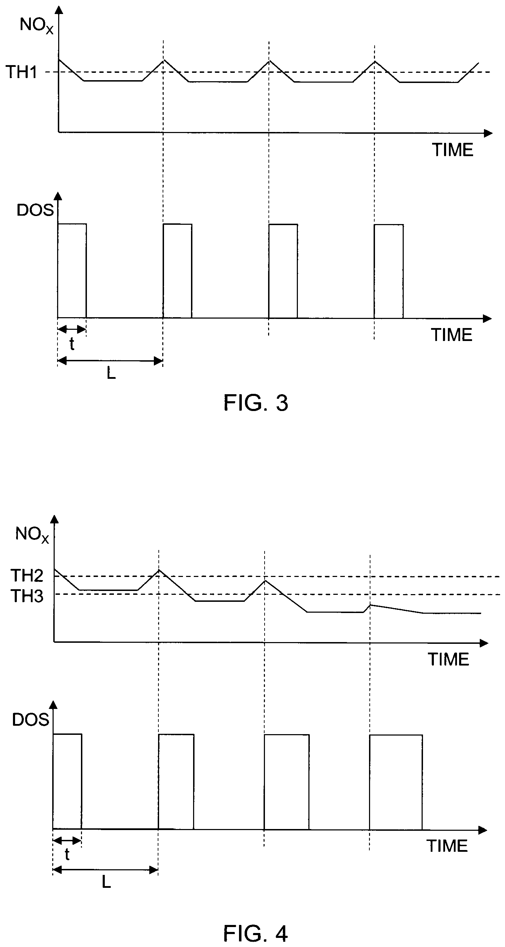

Figures 3 and 4 present graphs showing both measured NO_{X} levels after the catalyst (upper graphs) and the dosing of reducing agent (lower graphs).
The reducing agent is added by the injection device 12 by injection at a dosing frequency F, with a dosing period time L (L=1/F) defined as the time between the beginning of two consecutive injections, which injection takes place for a settable dosing time t of said dosing period time such that 0<t<L. The amount of reducing agent injected into the exhaust gases is varied by varying the dosing frequency and/or dosing time for the injection of reducing agent.

Figure 3 depicts a situation in which a constant dosing time t is applied at a constant dosing frequency F, i.e. constant dosing period time L. When the reducing agent is injected, the NO_{X} level drops before subsequently increasing when the reducing agent in the catalyst has been substantially consumed, seen in the graph as an increase at the end of the dosing period time L. The graph also shows a threshold level TH1 with which current NO_{X} amplitude may be compared. More than one threshold level may of course be used. The situation illustrated in Figure 3 is relatively stable in terms of temperatures and flows, so the NO_{X} level is relatively constant.

Figure 4 illustrates a situation in which the amount of reducing agent added is varied, in this case by gradually increasing the dosing time t, but the dosing frequency is constant. The result is that the increase in the NO_{X} amplitude at the end of the dosing period becomes smaller and at the same time NO_{X} decreases. This diagram shows two threshold levels TH2 and TH3 with which current NO_{X} amplitude may be compared. More or fewer levels may of course be used. In the situation illustrated, the amount of reduction corresponding to the fourth dosing shot shows the most advantageous result in the form of the lowest NO_{X} amplitude.

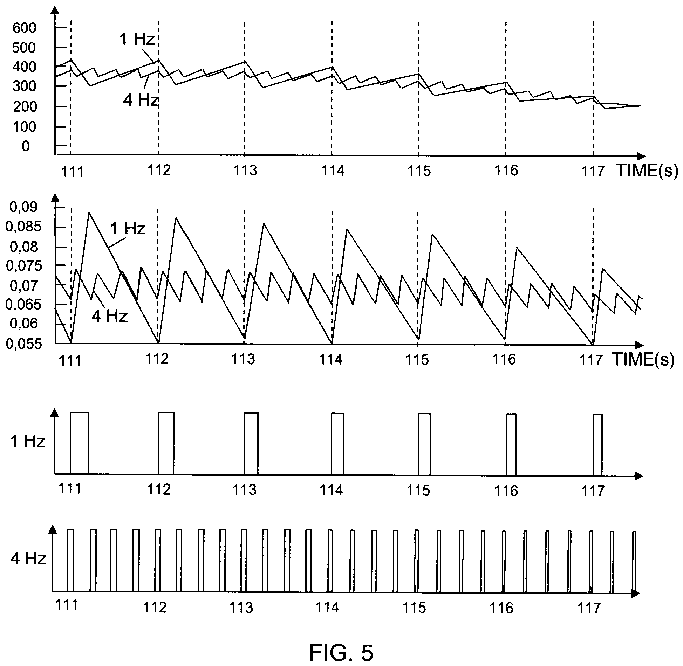

Figure 5 presents a number of graphs illustrating the present invention. The top graph shows measured values from the NO_{X} sensor over a period of about 6 seconds in two different cases, one where urea is added at a frequency of 1 second between injections (marked 1 Hz), the other where urea is added at a frequency of four injections per second (marked 4 Hz).
The next graph down shows the storage level in the catalyst in these two cases.
The bottom two graphs show doses of reducing agent delivered in both cases.

In both cases, the dosing frequency is constant while the dosing time decreases, as illustrated by for example the last but one graph comparing the respective 1 Hz dosing times at times 112 and 117.

The amplitude variations show up clearly in the top graph.

The supervision device 40 stores in the memory 44 predetermined parameter values related to the exhaust flow for each pertinent amount of reducing agent added. Also identified and stored are the parameter values and pertinent values for amounts of reducing agent added when the NO_{X} amplitude in the exhaust gases downstream of the catalyst fulfils the predetermined criteria for optimum regulation of the amount of reducing agent added.

The predetermined criteria comprise for example comparing the amplitude values with one or more settable threshold values for the amplitude.

According to an embodiment, the regulation is such that if amplitude values exceed a predetermined threshold value, the supply of reducing agent to the exhaust post-treatment system is altered, e.g. by increasing the dosing frequency and decreasing the dosing time. It is more generally the case that the amount of reducing agent added is regulated by the processing means 42 so that optimum regulation is achieved.

The present invention relates also to a method for supervising and adjusting the function of an exhaust post-treatment system for a motor vehicle combustion engine. Figure 2 illustrates the most important method steps.

A measurement signal provided by a sensor conveys the magnitude of a parameter related to NO_{X} in exhaust gases flowing out from an exhaust post-treatment device in, for example, the form of a catalyst (e.g. an SCR catalyst) or a filter, which is part of the exhaust post-treatment system, with detection of amplitude values for the measurement signal delivered by the sensor over a certain measuring period, and adding of a reducing agent to the exhaust gases which flow into the exhaust post-treatment device.
The method further comprises
- varying the amount of reducing agent added according to a predetermined pattern over a measuring period, whereby the reducing agent is added by injection at a dosing frequency F, with a dosing period time L (L=1/F) defined as the time between the beginning of two consecutive injections, which injection takes place for a settable dosing time t of said dosing period time such that 0<t<L, and the amount of reducing agent is varied by varying the dosing frequency and/or the dosing time for its injection,
- detecting the NO_{X} amplitude variations in the exhaust gases downstream of the exhaust post-treatment device, and
- identifying and storing values for the amount of reducing agent added when the NO_{X} amplitude variations in the exhaust gases downstream of the exhaust post-treatment device fulfil predetermined criteria for optimum regulation of the amount added.

According to a preferred embodiment, a criterion for optimum regulation is that the NO_{X} amplitude be minimised.

The method preferably also comprises
- storing predetermined parameter values related to the exhaust flow for each pertinent amount of reducing agent added,
- identifying and storing the parameter values and pertinent values for amounts of reducing agent added when the NO_{X} amplitude in the exhaust gases downstream of the catalyst fulfils said predetermined criteria for optimum regulation of the amount added.

The amount of reducing agent added is then regulated so as to achieve optimum regulation. This is done by the processor means 44 generating a control signal which is conveyed to the control means 20 in the injection device 12.

To identify whether predetermined criteria are fulfilled, amplitude values detected are for example compared with one or more settable threshold values.
The result of the comparison may for example show that amplitude values exceeding a given threshold value may be due to decrease in the catalyst's ability to convert urea. An example of remedial action might then be to alter the dosing frequency and the dosing time so that urea is injected in smaller doses but more frequently. This may result in better conversion in the case of high temperatures at which the catalysis takes place rapidly.

The amount of reducing agent is varied by varying the dosing frequency and/or the dosing time for injecting it. This may be done by increasing the dosing frequency and/or the dosing time.
It is also possible to vary the amount of reducing agent added by altering the dosing pressure, i.e. the pressure exerted upon the reducing agent during injection. This may of course be done in combination with varying the dosing frequency and/or the dosing time.

According to a further embodiment of the invention, the processing means is adapted to identifying a model of the dynamics of the exhaust post-treatment device on the basis of the optimum parameter values identified, i.e. pertinent temperature and mass flow values for each specific dosage of reducing agent.

The present invention is not restricted to the preferred embodiments described above. Sundry alternatives, modifications and equivalents may be used. The above embodiments are therefore not to be regarded at limiting the invention's protective scope which is defined by the attached claims.

## Claims

1. A method for supervision and adjustment of a function of an exhaust post-treatment system for a combustion engine on the basis of a measurement signal from a sensor for the magnitude of a parameter related to nitrogen oxides (NO_{X}) in exhaust gases flowing out from an exhaust post-treatment device, e.g. in the form of a catalyst or a filter, which forms part of the exhaust post-treatment system, with detection of amplitude values for the measurement signal delivered by the sensor over a certain measuring period, and addition of a reducing agent to the exhaust gases flowing into the exhaust post-treatment device,
**characterised in that** the method further comprises
- varying the amount of reducing agent added according to a predetermined pattern over a measuring period, whereby the reducing agent is added by injection at a dosing frequency F, with a dosing period time L (L=1/F) defined as the time between the beginning of two consecutive injections, which injection takes place for a settable dosing time t of said dosing period time such that 0<t<L, and the amount of reducing agent is varied by varying the dosing frequency and/or the dosing time for its injection,
- detecting the NO_{X} amplitude variations in the exhaust gases downstream of the exhaust post-treatment device, and
- identifying and storing values for the amount of reducing agent added when the NO_{X} amplitude variations detected in the exhaust gases downstream of the exhaust post-treatment device fulfil predetermined criteria for optimum regulation of the amount added.

2. A method according to claim 1, whereby a criterion for optimum regulation is that the NO_{X} amplitude be minimised.

3. A method according to claim 1 or 2, comprising
- storing predetermined parameter values related to the exhaust flow for each pertinent amount of reducing agent added,
- identifying and storing the parameter values and pertinent values for amount of reducing agent added when the NO_{X} amplitude in the exhaust gases downstream of the catalyst fulfils said predetermined criteria for optimum regulation of the amount added.

4. A method according to any one of claims 1-3, whereby the amount of reducing agent added is regulated so that optimum regulation is achieved.

5. A method according to any one of claims 1-4, whereby said predetermined criteria comprise said amplitude values being compared with a settable threshold value.

6. A method according to claim 3, whereby said parameter values are the mass flow of exhaust gases entering the exhaust post-treatment device and one or more temperatures of the exhaust flow.

7. A method according to any one of claims 1-6, whereby said exhaust post-treatment device is a selective catalytic reduction catalyst (SCR catalyst).

8. A method according to claim 3 or 6, whereby the dynamics of the exhaust post-treatment device are identified on the basis of said parameter values.

9. A method according to any one of the previous claims, whereby the amount of reducing agent added is varied by increasing or decreasing the dosing frequency.

10. A method according to any one of the previous claims, whereby the amount of reducing agent added is varied by increasing or decreasing the dosing time.

11. A method according to any one of the previous claims, whereby said measuring period comprises a predetermined number of dosing periods.

12. An exhaust post-treatment system for a combustion engine, comprising an exhaust post-treatment device (10), e.g. in the form of a catalyst or a filter,
a sensor (22) adapted to determining a measurement signal for the magnitude of a parameter related to nitrogen oxides (NO_{X}) in exhaust gases flowing out of said post-treatment device, with detection of amplitude values for the measurement signal delivered by the sensor,
an injection device (12) adapted to adding a reducing agent to the exhaust gases flowing into the exhaust post-treatment device,
a supervision device (40) comprising a processing means (42) and a memory (44), which processing means is adapted to receiving the measurement signal from the sensor (22) and to generating a control signal for the injection device,
**characterised in that** the supervision device (40) is adapted to delivering a control signal to the injection device so that the amount of reducing agent added is varied according to a predetermined pattern over a measuring period, in which the reducing agent is added by said injection device (12) by injecting it at a dosing frequency F, with a dosing period time L (L=1/F) defined as the time between the beginning of two consecutive injections, which injection takes place for a settable dosing time t of said dosing period time such that 0<t<L, and the amount of reducing agent is varied by varying the dosing frequency and/or the dosing time for its injection, and **in that** the processing means is adapted to detecting NO_{X} amplitude variations in the exhaust gases downstream of the exhaust post-treatment device and to identifying and storing, in the memory (44), values for amount of reducing agent added when the NO_{X} amplitude in the exhaust gases downstream of the post-treatment device fulfils predetermined criteria for optimum regulation of the amount added.

13. An exhaust post-treatment system according to claim 12, in which a criterion for optimum regulation is that the NO_{X} amplitude be minimised.

14. An exhaust post-treatment system according to claim 12 or 13, in which the supervision device (40) is adapted to storing in the memory (44) predetermined parameter values related to the exhaust flow for each pertinent amount of reducing agent added and to identifying and storing in the memory (44) the parameter values and pertinent values for amount of reducing agent added when the NO_{X} amplitude in the exhaust gases downstream of the catalyst fulfils said predetermined criteria for optimum regulation of the amount added.

15. An exhaust post-treatment system according to any one of claims 12-14, in which the amount of reducing agent added is regulated by the processing means (42) so that optimum regulation is achieved.

16. An exhaust post-treatment system according to any one of claims 12-15, in which said predetermined criteria comprise said amplitude values being compared with a settable threshold value.

17. An exhaust post-treatment system according to claim 14, in which said parameter values are the mass flow of exhaust gases entering the exhaust post-treatment device and one or more temperatures of the exhaust flow, and the parameter values are appropriate to being conveyed to the supervision device (40).

18. An exhaust post-treatment system according to any one of claims 12-17, in which said exhaust post-treatment device is a selective catalytic reduction catalyst (SCR catalyst).

19. An exhaust post-treatment system according to any one of claims 12-18, in which said measuring period comprises a predetermined number of dosing periods.

## Patentansprüche

1. Verfahren zur Überwachung und Anpassung einer Funktion eines Abgasnachbehandlungssystems für einen Verbrennungsmotor auf Basis eines Messsignals von einem Sensor für die Größe eines mit Stickoxiden (NOx) in Abgasen in Beziehung stehenden Parameters, die aus einer Abgasnachbehandlungs-Einrichtung z. B. in Form eines Katalysators oder Filters strömen, die Bestandteil des Abgasnachbehandlungssystems bildet, mit der Detektion der Amplitudenwerte des Messsignals, das vom Sensor über eine bestimmte Messperiode geliefert wird, und der Zugabe eines Reduktionsmittels zu den in die Abgasnachbehandlungs-Einrichtung strömenden Abgasen,
**dadurch gekennzeichnet, dass** das Verfahren ferner aufweist:
- Variieren der Menge des zuzugebenden Reduktionsmittels gemäß einem vorgegebenen Muster über eine Messperiode, wobei das Reduktionsmittel durch Einspritzen mit einer Dosierfrequenz F zugegeben wird, wobei eine Dosierperiodendauer L (L = 1/F) definiert ist als die Zeit zwischen dem Beginn zweier aufeinanderfolgender Einspritzungen, wobei die Einspritzung über eine einstellbare Dosierdauer t der Dosierperiodendauer so erfolgt, dass 0 < t < L, und die Menge des Reduktionsmittels variiert wird, indem die Dosierfrequenz und/oder die Dosierdauer während der Einspritzung variiert wird,
- Detektieren der NOx-Amplitudenschwankungen in den Abgasen stromabwärts der Abgasnachbehandlungs-Einrichtung, und
- Identifizieren und Speichern der Werte der zugegebenen Mengen des Reduktionsmittels, wenn die in den Abgasen stromabwärts der Abgasnachbehandlungs-Einrichtung detektierten NOx-Amplitudenschwankungen vorgegebene Kriterien für eine optimale Regelung der zuzugebenden Menge erfüllen.

2. Verfahren nach Anspruch 1, wobei ein Kriterium für eine optimale Regelung ist, dass die NOx-Amplitude minimiert wird.

3. Verfahren nach Anspruch 1 oder 2, aufweisend:
- Speichern vorgegebener Parameterwerte, die mit der Abgasströmung für jede relevante Menge des zugegebenen Reduktionsmittels in Beziehung stehen,
- Identifizieren und Speichern der Parameterwerte und relevanten Werte für die Menge des zugegebenen Reduktionsmittels, wenn die NOx-Amplitude in den Abgasen stromabwärts des Katalysators die vorgegebenen Kriterien für eine optimale Regelung der zugegebenen Menge erfüllt.

4. Verfahren nach einem der Ansprüche 1 bis 3, wobei die Menge des zuzugebenden Reduktionsmittels so geregelt wird, dass eine optimale Regelung erzielt wird.

5. Verfahren nach einem der Ansprüche 1 bis 4, wobei die vorgegebenen Kriterien die Amplitudenwerte umfassen, die mit einem einstellbaren Schwellenwert verglichen werden.

6. Verfahren nach Anspruch 3, wobei die Parameterwerte der Massendurchsatz der in die Abgasnachbehandlungs-Einrichtung eintretenden Abgase und eine oder mehrere Temperaturen der Abgasströmung sind.

7. Verfahren nach einem der Ansprüche 1 bis 6, wobei die Abgasnachbehandlungs-Einrichtung ein selektiver katalytischer Reduktionskatalysator (SCR-Katalysator) ist.

8. Verfahren nach Anspruch 3 oder 6, wobei die Dynamik der Abgasnachbehandlungs-Einrichtung auf Basis der Parameterwerte identifiziert wird.

9. Verfahren nach einem der vorigen Ansprüche, wobei die Menge des zuzugebenden Reduktionsmittels durch Erhöhen oder Verringern der Dosierfrequenz variiert wird.

10. Verfahren nach einem der vorigen Ansprüche, wobei die Menge des zuzugebenden Reduktionsmittels durch Verlängern oder Verkürzen der Dosierdauer variiert wird.

11. Verfahren nach einem der vorigen Ansprüche, wobei die Messperiode eine vorgegebene Anzahl Dosierperioden umfasst.

12. Abgasnachbehandlungssystem für einen Verbrennungsmotor aufweisend: eine Abgasnachbehandlungs-Einrichtung (10) z. B. in Form eines Katalysators oder Filters, einen Sensor (22), der zur Bestimmung eines Messsignals für die Größe eines mit Stickoxiden (NOx) in den aus der Abgasnachbehandlungs-Einrichtung strömenden Abgasen in Beziehung stehenden Parameters eingerichtet ist, mit der Detektion der Amplitudenwerte des Messsignals, das vom Sensor geliefert wird,
eine Einspritzeinrichtung (12), die zur Zugabe eines Reduktionsmittels zu den in die Abgasnachbehandlungs-Einrichtung strömenden Abgase eingerichtet ist,
eine Überwachungseinrichtung (40), die ein Verarbeitungsmittel (42) und einen Speicher (44) umfasst, wobei das Verarbeitungsmittel zum Empfangen des Messsignals vom Sensor (22) und zum Erzeugen eines Steuersignals für die Einspritzeinrichtung eingerichtet ist,
**dadurch gekennzeichnet, dass** die Überwachungseinrichtung (40) zum Abgeben eines Steuersignals an die Einspritzeinrichtung eingerichtet ist, so dass die Menge des zugegebenen Reduktionsmittels gemäß einem vorgegebenen Muster über eine Messperiode variiert wird, in der das Reduktionsmittel durch die Einspritzeinrichtung (12) durch Einspritzen mit einer Dosierfrequenz F und einer Dosierperiodendauer L (L = 1/F), die definiert ist als die Zeit zwischen dem Beginn zweier aufeinanderfolgender Einspritzungen, zugegeben wird, wobei die Einspritzung über eine einstellbare Dosierdauer t der Dosierperiodendauer so erfolgt, dass 0 < t < L, und die Menge des Reduktionsmittels variiert wird, indem die Dosierfrequenz und/oder die Dosierdauer während der Einspritzung variiert wird, und dass das Verarbeitungsmittel zum Detektieren der NOx-Amplitudenschwankungen in den Abgasen stromabwärts der Abgasnachbehandlungs-Einrichtung und Identifizieren und Speichern der Werte der zugegebenen Mengen des Reduktionsmittels im Speicher (44) eingerichtet ist, wenn die NOx-Amplitude in den Abgasen stromabwärts der Abgasnachbehandlungs-Einrichtung vorgegebene Kriterien für eine optimale Regelung der zugegebenen Menge erfüllt.

13. Abgasnachbehandlungssystem nach Anspruch 12, wobei ein Kriterium für eine optimale Regelung ist, dass die NOx-Amplitude minimiert wird.

14. Abgasnachbehandlungssystem nach Anspruch 12 oder 13, wobei die Überwachungseinrichtung (40) zum Speichern vorgegebener Parameterwerte im Speicher (44), die mit der Abgasströmung für jede relevante Menge des zugegebenen Reduktionsmittels in Beziehung steht, und zum Identifizieren und Speichern im Speicher (44) der Parameterwerte und der relevanten Werte der zugegebenen Menge des Reduktionsmittels eingerichtet ist, wenn die NOx-Amplitude in den Abgasen stromabwärts des Katalysators die vorgegebenen Kriterien für eine optimale Regelung der zugegebenen Menge erfüllt.

15. Abgasnachbehandlungssystem nach einem der Ansprüche 12 bis 14, wobei die Menge des zuzugebenden Reduktionsmittels durch das Verarbeitungsmittel (42) so geregelt wird, dass eine optimale Regelung erzielt wird.

16. Abgasnachbehandlungssystem nach einem der Ansprüche 12 bis 15, wobei die vorgegebenen Kriterien die Amplitudenwerte umfassen, die mit einem einstellbaren Schwellenwert verglichen werden.

17. Abgasnachbehandlungssystem nach Anspruch 14, wobei die Parameterwerte der Massendurchsatz der in die Abgasnachbehandlungs-Einrichtung eintretenden Abgase und eine oder mehrere Temperaturen der Abgasströmung sind.

18. Abgasnachbehandlungssystem nach einem der Ansprüche 12 bis 17, wobei die Abgasnachbehandlungs-Einrichtung ein selektiver katalytischer Reduktionskatalysator (SCR-Katalysator) ist.

19. Abgasnachbehandlungssystem nach einem der Ansprüche 12 bis 18, wobei die Messperiode eine vorgegebene Anzahl Dosierperioden umfasst.

## Revendications

1. Procédé de supervision et d'ajustement d'une fonction d'un système de post-traitement d'échappement pour un moteur à combustion sur la base d'un signal de mesure d'un capteur pour la grandeur d'un paramètre lié à des oxydes d'azote (NO_{X}) dans des gaz d'échappement sortant d'un dispositif de post-traitement d'échappement, par exemple sous la forme d'un catalyseur ou d'un filtre, qui forme une partie du système de post-traitement d'échappement, avec détection de valeurs d'amplitude pour le signal de mesure délivré par le capteur sur une certaine période de mesure, et ajout d'un agent réducteur aux gaz d'échappement circulant dans le dispositif de post-traitement d'échappement,
**caractérisé en ce que** le procédé comprend en outre les étapes consistant à
- faire varier la quantité d'agent réducteur ajouté selon un modèle prédéterminé sur une période de mesure, de sorte que l'agent réducteur est ajouté par injection à une fréquence de dosage F, avec un temps de période de dosage L (L = 1/F) défini comme le temps entre le début de deux injections consécutives, laquelle l'injection a lieu pour un temps de dosage réglable t dudit temps de période de dosage tel que 0 < t <L, et la quantité d'agent réducteur est varié en faisant varier la fréquence de dosage et/ou le temps de dosage pour son injection,
- détecter les variations d'amplitude des NO_{X} dans les gaz d'échappement en aval du dispositif de post-traitement d'échappement, et
- identifier et stocker des valeurs pour la quantité d'agent réducteur ajouté lorsque les variations d'amplitude de NO_{X} détectées dans les gaz d'échappement en aval du dispositif de post-traitement d'échappement satisfont à des critères prédéterminés pour une régulation optimale de la quantité ajoutée.

2. Procédé selon la revendication 1, dans lequel un critère pour une régulation optimale est que l'amplitude de NO_{X} est minimisée.

3. Procédé selon la revendication 1 ou 2, comprenant les étapes consistant à
- stocker des valeurs de paramètre prédéterminées liées au flux d'échappement pour chaque quantité pertinente d'agent réducteur ajouté,
- identifier et stocker les valeurs de paramètre et les valeurs pertinentes pour la quantité d'agent réducteur ajouté lorsque l'amplitude de NO_{X} dans les gaz d'échappement en aval du catalyseur satisfait auxdits critères prédéterminés pour une régulation optimale de la quantité ajoutée.

4. Procédé selon l'une quelconque des revendications 1 à 3, dans lequel la quantité d'agent réducteur ajouté est régulée de manière à obtenir une régulation optimale.

5. Procédé selon l'une quelconque des revendications 1 à 4, dans lequel lesdits critères prédéterminés comprennent lesdites valeurs d'amplitude qui sont comparées à une valeur de seuil réglable.

6. Procédé selon la revendication 3, dans lequel lesdites valeurs de paramètre sont le flux massique de gaz d'échappement entrant dans le dispositif de post-traitement d'échappement et une ou plusieurs températures du flux d'échappement.

7. Procédé selon l'une quelconque des revendications 1 à 6, dans lequel ledit dispositif de post-traitement d'échappement est un catalyseur de réduction catalytique sélective (catalyseur SCR).

8. Procédé selon la revendication 3 ou 6, dans lequel les dynamiques du dispositif de post-traitement d'échappement sont identifiées sur la base desdites valeurs de paramètre.

9. Procédé selon l'une quelconque des revendications précédentes, dans lequel la quantité d'agent réducteur ajouté est variée en augmentant ou en diminuant la fréquence de dosage.

10. Procédé selon l'une quelconque des revendications précédentes, dans lequel la quantité d'agent réducteur ajouté est variée en augmentant ou en diminuant le temps de dosage.

11. Procédé selon l'une quelconque des revendications précédentes, dans lequel ladite période de mesure comprend un nombre prédéterminé de périodes de dosage.

12. Système de post-traitement d'échappement pour un moteur à combustion, comprenant un dispositif de post-traitement d'échappement (10), par exemple sous la forme d'un catalyseur ou d'un filtre, un capteur (22) adapté pour déterminer un signal de mesure pour la grandeur d'un paramètre lié à des oxydes d'azote (NO_{X}) dans les gaz d'échappement sortant dudit dispositif de post-traitement, avec détection de valeurs d'amplitude pour le signal de mesure délivré par le capteur,
un dispositif d'injection (12) adapté pour ajouter un agent réducteur aux gaz d'échappement qui circulent dans le dispositif de post-traitement d'échappement,
un dispositif de supervision (40) comprenant des moyens de traitement (42) et une mémoire (44), lesquels moyens de traitement sont adaptés pour recevoir le signal de mesure provenant du capteur (22) et pour générer un signal de commande pour le dispositif d'injection,
**caractérisé en ce que** le dispositif de supervision (40) est adapté pour délivrer un signal de commande au dispositif d'injection de sorte que la quantité d'agent réducteur ajouté est variée selon un modèle prédéterminé sur une période de mesure, dans lequel l'agent réducteur est ajouté par ledit dispositif d'injection (12) en l'injectant à une fréquence de dosage F, avec un temps de période de dosage L (L = 1/F) défini comme le temps entre le début de deux injections consécutives, laquelle injection a lieu pour un temps de dosage réglable t dudit temps de période de dosage de sorte que 0 < t < L, et la quantité d'agent réducteur est variée en faisant varier la fréquence de dosage et/ou le temps de dosage pour son injection, et **en ce que** les moyens de traitement sont adaptés pour détecter des variations d'amplitude de NO_{X} dans les gaz d'échappement en aval du dispositif de post-traitement d'échappement et pour identifier et stocker, dans la mémoire (44), des valeurs pour la quantité d'agent réducteur ajouté lorsque l'amplitude de NO_{X} dans les gaz d'échappement en aval du dispositif de post-traitement satisfait à des critères prédéterminés pour une régulation optimale de la quantité ajoutée.

13. Système de post-traitement d'échappement selon la revendication 12, dans lequel un critère pour une régulation optimale est que l'amplitude de NO_{X} est minimisée.

14. Système de post-traitement d'échappement selon la revendication 12 ou 13, dans lequel le dispositif de supervision (40) est adapté pour stocker dans la mémoire (44) des valeurs de paramètre prédéterminées liées au flux d'échappement pour chaque quantité pertinente d'agent réducteur ajouté et pour identifier et stocker dans la mémoire (44) les valeurs de paramètre et les valeurs pertinentes pour la quantité d'agent réducteur ajouté lorsque l'amplitude de NO_{X} dans les gaz d'échappement en aval du catalyseur satisfait auxdits critères prédéterminés pour une régulation optimale de la quantité ajoutée.

15. Système de post-traitement d'échappement selon l'une quelconque des revendications 12 à 14, dans lequel la quantité d'agent réducteur ajouté est régulée par les moyens de traitement (42) de manière à obtenir une régulation optimale.

16. Système de post-traitement d'échappement selon l'une quelconque des revendications 12 à 15, dans lequel lesdits critères prédéterminés comprennent lesdites valeurs d'amplitude qui sont comparées à une valeur de seuil réglable.

17. Système de post-traitement d'échappement selon la revendication 14, dans lequel lesdites valeurs de paramètre sont le flux massique de gaz d'échappement entrant dans le dispositif de post-traitement d'échappement et une ou plusieurs températures du flux d'échappement, et les valeurs de paramètre sont appropriées pour être envoyées au dispositif de supervision (40).

18. Système de post-traitement d'échappement selon l'une quelconque des revendications 12 à 17, dans lequel ledit dispositif de post-traitement d'échappement est un catalyseur de réduction catalytique sélective (catalyseur SCR).

19. Système de post-traitement d'échappement selon l'une quelconque des revendications 12 à 18, dans lequel ladite période de mesure comprend un nombre prédéterminé de périodes de dosage.
